# EUROPEAN PATENT APPLICATION

(11) **EP 4 434 872 A1**
(43) Date of publication of application: **25.09.2024**
(21) Application number: 22911579.5
(22) Date of filing: 27.10.2022
(51) Int. Cl.: B63B 35/44, F03D 13/25

(54) **FLOATING STRUCTURE AND WIND POWER GENERATION APPARATUS**

(30) Priority: 22.12.2021 KR 20210184761
(71) Applicant: POSCO Co., Ltd, Pohang-si, Gyeongsangbuk-do 37859 (KR)
(72) Inventor: KIM, Eungsoo, Incheon 22002 (KR); NOH, Myunghyun, Incheon 21585 (KR); PARK, Kyusik, Incheon 21986 (KR)
(74) Representative: Meissner Bolte Partnerschaft mbB
(86) International application number: PCT/KR2022/016536
(87) International publication number: WO 2023/120941

(57) **Abstract**

Disclosed herein are a floating structure and a wind power generation apparatus. The floating structure according to an aspect of the disclosure includes a plurality of columns providing buoyancy and a connecting body connecting the plurality of columns, wherein at least one of the plurality of columns includes a plurality of column bodies connected to each other, and a hollow portion formed surrounded by the plurality of column bodies.

## Description

### [Technical Field]

The present disclosure relates to a floating structure and a wind power generation apparatus, and more particularly, to a floating structure and a wind power generation apparatus that floats on the sea and support facilities located on thereon.

### [Background Art]

In general, wind power generation converts wind energy into mechanical energy to produce electricity, and has been attracted attention as a clean energy source for reducing greenhouse gas emissions. Such wind power generation devices are mainly installed on land, but wind power generation devices installed on land have problems such as noise problems and land acquisition issues. As a result, the trend of installing wind power generation devices offshore is increasing recently.

One type of offshore wind power generation devices is floating wind power generation devices, which are installed by floating a wind power generation device on the sea. The floating wind power generation devices have the advantage that they may be installed without being affected by the depth of the sea. In addition, the floating wind power generation devices have the advantage of being able to be installed in deep ocean waters to increase the efficiency of power generation by taking advantage of strong winds at sea.

The floating wind power generation devices have equipment for power generation placed on the top, and a floating structure to support the equipment is placed on the bottom. When the floating structure is placed in the sea, vortices are generated in the floating structure by the ocean currents, and the vortices may cause vibration in the floating structure. The vibration of the floating structure may cause damage to the floating structure, and may also affect the safety of power generation equipment placed on top of the floating structure.

### [Disclosure]

### [Technical Problem]

Therefore, it is an aspect of the present disclosure to provide a floating structure and a wind power generation apparatus capable of supporting power generation equipment and minimizing vibration caused by vortices at sea.

### [Technical Solution]

In accordance with one aspect of the disclosure, a floating structure includes a plurality of columns providing buoyancy, and a connecting body connecting the plurality of columns, wherein at least one of the plurality of columns includes a plurality of column bodies connected to each other, and a hollow portion formed surrounded by the plurality of column bodies.

Each of the plurality of column bodies may include an upper surface portion having a polygonal shape, a lower surface portion having the same shape as the upper surface portion, and a side portion connecting the upper surface portion and the lower surface portion, wherein the plurality of column bodies are connected to each other by contacting adjacent side portions of the plurality of column bodies.

Each of the plurality of column bodies may be formed extending in a first direction, the plurality of column bodies may be arranged in a second direction perpendicular to the first direction, and a portion of the hollow portion may be filled with seawater.

The connecting body may include an equipment support portion supporting equipment, a plurality of column support portion disposed at positions spaced apart by a predetermined distance from the equipment support portion, each supporting the plurality of columns, and a support connection portion connecting the equipment support portion and the plurality of column support portions.

Each of the plurality of column support portions may be provided with a connecting hole penetrating in a vertical direction.

The connecting hole may be connected to the hollow portion.

The connecting body may further include a plurality of support beams each connecting the equipment support portion and the plurality of columns.

The hollow portion may have a circular shape in horizontal cross-section.

The hollow portion may have a polygonal shape in the horizontal cross-section.

Each of the plurality of column bodies may have a circular shape in the horizontal cross-section.

Each of the plurality of column bodies may have a polygonal shape in the horizontal cross-section.

The hollow portion may have different cross-sectional areas depending on the height.

The lower surface portion may have a different area from the upper surface portion.

In accordance with one aspect of the disclosure, a wind power generation apparatus includes a wind power generation equipment generating electricity by wind power, and a floating structure supporting the wind power generation equipment and providing buoyancy, wherein the floating structure includes a plurality of columns providing buoyancy, and a connecting body connecting the plurality of columns, wherein at least one of the plurality of columns includes a plurality of column bodies connected to each other, and a hollow portion formed surrounded by the plurality of column bodies.

Each of the plurality of column bodies may include an upper surface portion having a polygonal shape, a lower surface portion having the same shape as the upper surface portion, and a side portion connecting the upper surface portion and the lower surface portion, wherein the plurality of column bodies are connected to each other by contacting adjacent side portions of the plurality of column bodies.

The connecting body may include an equipment support portion supporting the wind power generation equipment, a plurality of column support portion disposed at positions spaced apart by a predetermined distance from the equipment support portion, each supporting the plurality of columns, and a support connection portion connecting the equipment support portion and the plurality of column support portions.

Each of the plurality of column support portions may be provided with a connecting hole penetrating in a vertical direction.

The connecting body may further include a plurality of support beams connecting the equipment support portion and the plurality of columns, respectively.

### [Advantageous Effects]

In one embodiment of the present disclosure, since the plurality of columns includes the plurality of column bodies and the hollow portion, the hollow portion may be filled with seawater to increase the horizontal mass and inertia of the floating structure by the seawater filling the hollow portion. As a result, the horizontal translational and rotational motions caused by high waves and strong winds at sea may be reduced, thereby improving the dynamic kinetic resistance performance.

Furthermore, since the dynamic kinetic resistance performance is improved by the plurality of columns having the hollow portion, the acceleration of the turbine nacelle and the bending moment of the wind power generation apparatus may be reduced.

Furthermore, since the column bodies included in the plurality of columns are formed by assembling the plurality of column bodies rather than forming a single column body, it is possible to omit machining processes with high difficulty, such as curve bending, thereby increasing column productivity.

### [Description of Drawings]

FIG. 1 is a view illustrating a wind power generation apparatus according to a first embodiment of the present disclosure.
FIG. 2 is a view illustrating a floating structure of the wind power generation apparatus according to the first embodiment of the present disclosure.
FIG. 3 is a view illustrating a column of a wind power generation apparatus according to a first embodiment of the present disclosure.
FIG. 4 is a view illustrating a column of a wind power generation apparatus according to a second embodiment of the present disclosure.
FIG. 5 is a view illustrating a column of a wind power generation apparatus according to a third embodiment of the present disclosure.
FIG. 6 is a view illustrating a column of a wind power generation apparatus according to a fourth embodiment of the present disclosure.
FIG. 7 is a view illustrating a column of a wind power generation apparatus according to a fifth embodiment of the present disclosure.
FIG. 8 is a view illustrating a column of a wind power generation apparatus according to a sixth embodiment of the present disclosure.

### [Modes of the Invention]

Hereinafter, the embodiments of the disclosure will be described in detail with reference to accompanying drawings. It should be understood that the terms used in the specification and the appended claims should not be construed as limited to general and dictionary meanings, but interpreted based on the meanings and concepts corresponding to technical aspects of the disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the spirit and scope of the disclosure. To clearly illustrate the disclosure, parts not essential to the description have been omitted from the drawings, and in the drawings, the widths, lengths, thicknesses, or the like of components may be exaggerated for convenience. Throughout the specification, like reference numerals refer to like components.

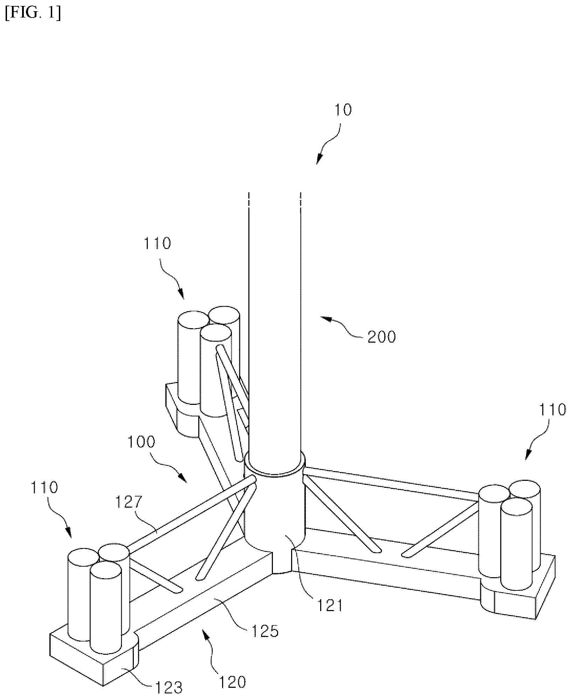

With reference to FIGS. 1 to 3, a wind power generation apparatus 10 according to a first embodiment of the present disclosure will be described. The wind power generation apparatus 10 according to the first embodiment of the present disclosure may be installed floating on the sea to generate power by offshore wind. The wind power generation apparatus 10 may include a floating structure 100 and a power generation equipment 200.

The power generation equipment 200 is shown schematically in FIG. 1, but is placed on top of the floating structure 100 and may generate electricity by being rotated by offshore wind. The power generation equipment 200 may include a wind turbine installed on the top of a support column, and the wind turbine may include a plurality of blades and a nacelle. In the first embodiment of the present disclosure, as described above, the power generation equipment 200 is described as being located on the floating structure 100, but various other facilities may be located on top of the floating structure 100 as desired.

The floating structure 100 may be installed in the sea to float on the sea surface, and support the power generation equipment 200. The floating structure 100 may include a column 110 and a connecting body 120.

The column 110 may be located on an upper portion of the connecting body 120, and may be provided in a plurality. As shown in FIG. 1, three columns 110 may be arranged on the upper portion of the connecting body 120, spaced apart from each other, or more columns 110 may be arranged as desired. The plurality of columns 110 may be arranged to be spaced apart from each other by an equal distance. Each of the columns 110 may include a column body 112 and a hollow portion 114.

The column body 112 may be provided in a plurality, and the plurality of column bodies 112 may be arranged adjacent to each other. The column bodies 112 may have a predetermined length and a circular or polygonal shape in cross-section. For example, in the present embodiment, the cross-sectional shape of the column body 112 is described as circular.

The respective column body 112 may be a structure with a filled interior. In this case, a buoyant material may be used as the material forming the column body 112. In addition, if necessary, the column body 112 may be made of a material such as metal, and when such a material is used, the column body 112 may be manufactured to have a hollow interior. Accordingly, the column body 112 may be capable of floating on its own, and may have a predetermined amount of buoyancy.

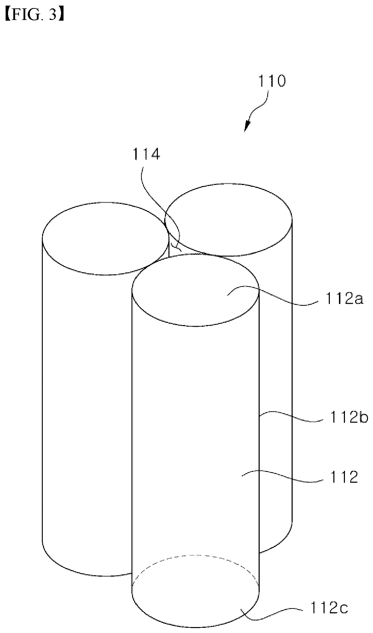

As shown in FIG. 3, the column body 112 may include an upper surface portion 112a, a lower surface portion 112b, and a side portion 112c.

In the present embodiment, the upper surface portion 112a may have a circular shape and may have a predetermined area. The lower surface portion 112b may have the same shape as the upper surface portion 112a and may also have the same area as the upper surface portion 112a. The side portion 112c may connect the upper surface portion 112a and the lower surface portion 112b and form an outer circumferential surface of the column body 112.

When the plurality of column bodies 112 as described above are arranged adjacent to each other, the side portions 112c of the column bodies 112 may be brought into contact with each other. In other words, the column body 112 may have a predetermined length in a first direction, and the plurality of column bodies 112 may be arranged adjacent to each other in a second direction, wherein the first direction and the second direction may be perpendicular to each other. In other words, the column body 112 may have a predetermined length in a direction perpendicular to the horizontal plane, and the plurality of column bodies 112 may be arranged adjacent to each other in the horizontal direction. Accordingly, the side portions 112c of the plurality of column bodies 112 may be arranged in contact with each other.

As described above, since the plurality of column bodies 112 are arranged adjacent to each other in a state of contact with each other, the hollow portion 114 may be formed between the plurality of column bodies 112. The hollow portion 114 may be formed surrounded by the plurality of column bodies 112 since the plurality of column bodies 112 are disposed adjacent to each other in a contact state. Accordingly, the hollow portion 114 may be formed to have a predetermined length in a longitudinal direction of the column body 112, and may be formed with opposite ends open in the longitudinal direction.

As such, at least three column bodies 112 may be arranged in contact with each other so as to form the hollow portion 114 between the plurality of column bodies 112 in a state in which the plurality of column bodies 112 are in contact with each other. In the present embodiment, three column bodies 112 having a cylindrical shape may be arranged with their side portions 112c in contact with each other. As a result, the cross-sectional shape of the hollow portion 114 may have an approximately triangular shape with each side having a concavely curved surface. Here, the cross-sectional shape of the hollow portion 114 may be formed into different shapes depending on the shapes of the plurality of column bodies 112.

The connecting body 120 may support the plurality of columns 110 and may be disposed on a lower portion of the plurality of columns 110. The connecting body 120 may include an equipment support portion 121, a column support portion 123, a support connection portion 125, and a support beam 127.

The equipment support portion 121 may be provided to support the power generation equipment 200 and may be disposed at a central portion of the connecting body 120. The power generation equipment 200 may be a wind power generation equipment capable of generating electricity by offshore wind, wherein support column bodies of the power generation equipment 200 may be disposed.

The column support portion 123 may be disposed at a position spaced apart by a predetermined distance with respect to the centrally disposed equipment support portion 121, and may be provided in a plurality. The plurality of column support portions 123 may each have the plurality of columns 110 disposed thereon, and may have a predetermined width to allow the plurality of columns 110 to be disposed.

Since the plurality of columns 110 in the present embodiment is described as having three column support portions 123, the column support portions 123 may also have three column support portions 123. The three column support portions 123 may be disposed at positions spaced apart from the equipment support portion 121 by the predetermined distance, and the three column support portions 123 may be disposed at equal intervals from each other.

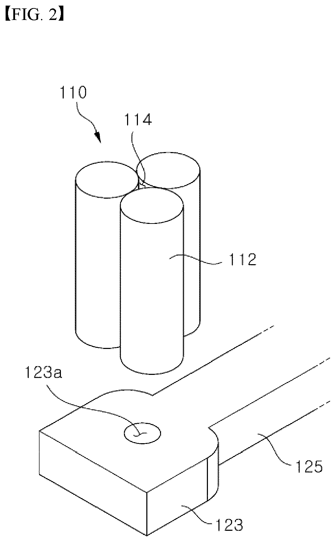

A connecting hole 123a may be formed in each of the column support portions 123. The connecting hole 123a may be formed in the column support portion 123 in a vertical direction and may be connected to the hollow portion 114 formed in the column 110 disposed on an upper portion of the column support portion 123. Here, the shape of the connecting hole 123a may be the same as the shape of the hollow portion 114 of the column 110, but is not limited thereto. As shown in FIG. 2, the cross-sectional shape of the connecting hole 123a may have a circular shape, and may have various other shapes.

The connecting hole 123a as described above may be arranged such that, when the column support portion 123 is placed in the sea with the column 110, seawater may fill the hollow portion 114 formed in the column 110 through the connecting hole 123a from a lower portion of the connecting hole 123a. Of course, when the floating structure 100 is placed in the sea, seawater may enter the hollow portion 114 through an open side at an upper portion of the hollow portion 114, so that the connecting hole 123a may not be formed in the column support portion 123. However, since the connecting hole 123a is formed in the column support portion 123, the hollow portion 114 may be rapidly filled with seawater.

As described above, when the hollow portion 114 of the column 110 is filled with seawater, the horizontal mass and inertia of the floating structure 100 may be increased, thereby reducing the translational and rotational motion caused by currents in the sea.

The support connection portion 125 may be arranged to connect the equipment support portion 121 and the column support portion 123. The support connection portion 125 may connect the equipment support portion 121 and the column support portion 123 to each other as the column support portion 123 is disposed at a predetermined distance from the equipment support portion 121. In other words, the support connection portion 125 may be arranged to extend from the centrally disposed equipment support portion 121 toward the outside of the column support portion 123, and as shown in FIG. 1, three support connection portion 125 may be connected and arranged in an outward direction from the equipment support portion 121.

As shown in the drawings, the support connection portion 125 may have a predetermined width and may have a predetermined length, extending outwardly from the equipment support portion 121.

The support beam 127 may be disposed on the upper portion of the support connection portion 125, and one end thereof may be connected to the column 110 and the other end thereof may be connected to the equipment support portion 121. The support beam 127 may serve to support the plurality of columns 110 so that they may be more firmly coupled to the connecting body 120. A plurality of support beams 127 may be arranged between one column 110 and the equipment support portion 121, and may be arranged in the horizontal direction or in an inclined state.

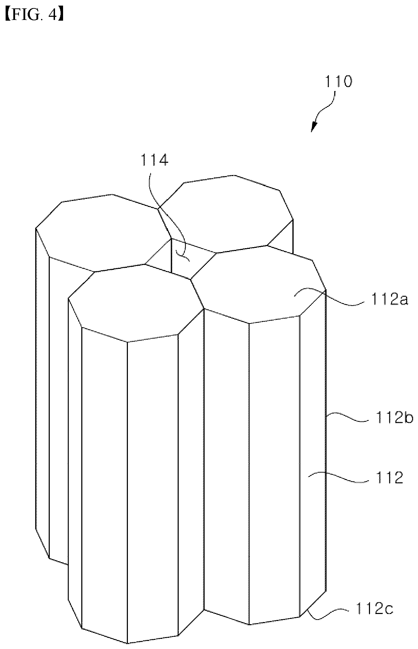

With reference to FIG. 4, the column 110 of the wind power generation apparatus 10 according to a second embodiment of the present disclosure will be described. In describing the wind power generation apparatus 10 according to the second embodiment of the present disclosure, the same description as in the first embodiment may be omitted.

The individual column 110 according to the second embodiment of the present disclosure may include the column body 112 and the hollow portion 114. The plurality of column bodies 112 may be provided, and may be arranged adjacent to each other, each including the upper surface portion 112a, the lower surface portion 112b, and the side portion 112c.

The upper surface portion 112a may have a hexagonal shape and may have a predetermined area. The lower surface portion 112b may have the same shape as the upper surface portion 112a and may also have the same area as the upper surface portion 112a. The side portion 112c may connect the upper surface portion 112a and the lower surface portion 112b, and may include six rectangular shapes, as shown in FIG. 4.

The plurality of column bodies 112 may be arranged such that the rectangular shapes forming the side portion 112c are in contact with each other to form the hollow portion 114 at the center thereof. Since the upper surface portion 112a and the lower surface portion 112b have a hexagonal shape, the cross-sectional shape of the hollow portion 114 may be formed as a square shape as the four column bodies 112 are arranged such that the rectangular shapes of the side portions 112c are in contact with each other.

In the present embodiment, the upper surface portion 112a and the lower surface portion 112b of the column body 112 are described as having a regular hexagonal shape, but the upper surface portion 112a and the lower surface portion 112b of the column body 112 may not necessarily have a regular hexagonal shape, and accordingly, the cross-sectional shape of the hollow portion 114 may have a general rectangular shape rather than a square shape.

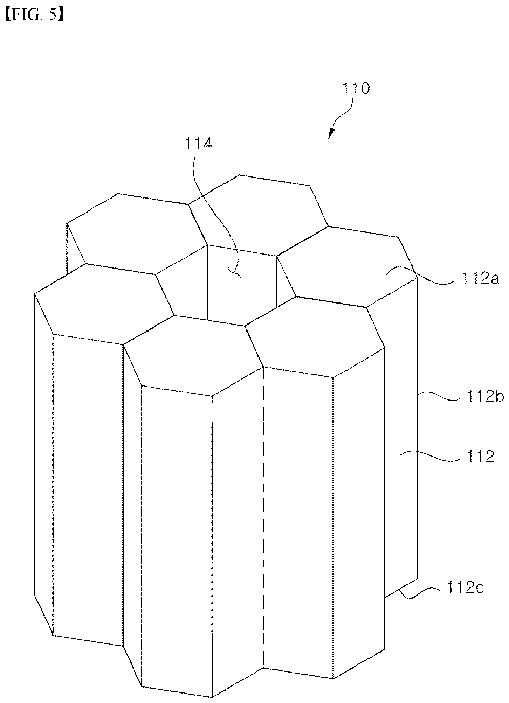

With reference to FIG. 5, the column 110 of the wind power generation apparatus 10 according to a third embodiment of the present disclosure will be described. In describing the wind power generation apparatus 10 according to the third embodiment of the present disclosure, the same description as in the first embodiment may be omitted.

The column 110 according to the third embodiment of the present disclosure may include the column body 112 and the hollow portion 114. The plurality of column bodies 112 may be provided and may be arranged adjacent to each other, each including the upper surface portion 112a, the lower surface portion 112b, and the side portion 112c.

The upper surface portion 112a may have an octagonal shape and may have a predetermined area. The lower surface portion 112b may have the same shape as the upper surface portion 112a and may also have the same area as the upper surface portion 112a. The side portion 112c may connect the upper surface portion 112a and the lower surface portion 112b and may include eight rectangular shapes, as shown in FIG. 5.

The plurality of column bodies 112 may be arranged such that the rectangular shapes forming the side portion 112c are in contact with each other to form the hollow portion 114 at the center thereof. Since the upper surface portion 112a and the lower surface portion 112b have an octagonal shape, the cross-sectional shape of the hollow portion 114 may be formed as a hexagonal shape as the six column bodies 112 are arranged such that the rectangular shapes of the side portions 112c are in contact with each other.

In the present embodiment, the upper surface portion 112a and the lower surface portion 112b of the column body 112 are described as having a regular octagonal shape, but the upper surface portion 112a and the lower surface portion 112b of the column body 112 may not necessarily have a regular octagonal shape, and accordingly, the cross-sectional shape of the hollow portion 114 may have a general hexagonal shape rather than a regular hexagonal shape.

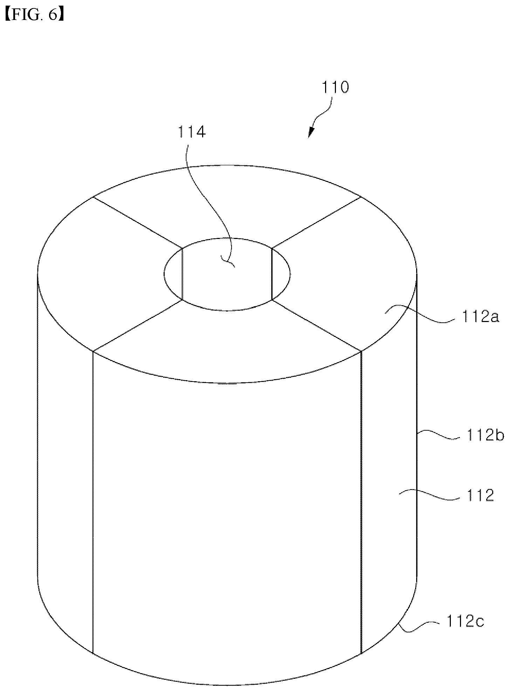

With reference to FIG. 6, the column 110 of the wind power generation apparatus 10 according to a fourth embodiment of the present disclosure will be described. In describing the wind power generation apparatus 10 according to the fourth embodiment of the present disclosure, the same description as in the first embodiment may be omitted.

The column 110 according to the fourth embodiment of the present disclosure may include the column body 112 and the hollow portion 114. The plurality of column bodies 112 may be provided, and may be arranged adjacent to each other, each including the upper surface portion 112a, the lower surface portion 112b, and the side portion 112c.

The upper surface portion 112a may have the shape of a truncated cone with the sides of the truncated cone unfolded. In other words, the upper surface portion 112a may have the shape of a fan with a predetermined radius and a central angle of 90 degrees, wherein a central portion of the fan is partially cut off. Here, the shape of the central portion of the partially cut-off fan may be a fan shape having a relatively small radius with a central angle of 90 degrees.

Accordingly, the upper surface portion 112a may have a geometric shape enclosed by two curved lines and two straight lines, wherein the radius of the outer curve is larger than the radius of the inner curve and the two straight lines may be a straight line connecting a first end of the outer curve and a first end of the inner curve and a straight line connecting a second end of the outer curve and a second end of the inner curve.

Here, optionally, the inner curve and the outer curve of the upper surface portion 112a may not be necessarily formed as curves, and may each be straight lines, or the inner curve and the outer curve may be free curves rather than arcs of a circle.

The lower surface portion 112b may have the same shape and the same area as the upper surface portion 112a.

The side portion 112c may connect the upper surface portion 112a and the lower surface portion 112b, and may have two rectangular surfaces and two curved surfaces, as shown in FIG. 6. The two curved surfaces may be an outer curved surface connecting the outer curves of the upper surface portion 112a and the lower surface portion 112b and an inner curved surface connecting the inner curves of the upper surface portion 112a and the lower surface portion 112b. In addition, the two rectangular surfaces may be surfaces connecting the outer curved surface and the inner curved surface.

The column body 112 having the shape as described above may be arranged such that the rectangular shapes of the side portions 112c are in contact with each other and the upper surface portion 112a has a cut-off fan shape with a central angle of 90 degrees. As a result, the cross-sectional shape of the hollow portion 114 may be formed as a circular shape as the four column bodies 112 are arranged such that the rectangular shapes of the side portions 112c are in contact with each other.

In the present embodiment, the four column bodies 112 are described as being used as the upper surface portion 112a and the lower surface portion 112b of the column body 112 have a cut-off fan shape with a central angle of 90 degrees. However, the number of column bodies 112 used may vary when the central angles of the upper surface portion 112a and the lower surface portion 112b are varied.

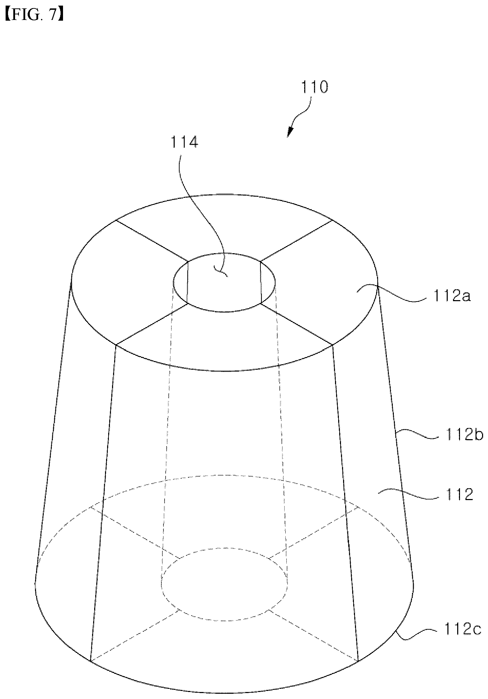

With reference to FIG. 7, the column 110 of the wind power generation apparatus 10 according to a fifth embodiment of the present disclosure will be described. In describing the wind power generation apparatus 10 according to the fifth embodiment of the present disclosure, the same description as in the first and fourth embodiments may be omitted.

The upper surface portion 112a may have a truncated fan shape, which is the shape of unfolding the sides of a truncated cone, as in the fourth embodiment, and may have a predetermined area.

The lower surface portion 112b may have the same shape as the upper surface portion 112a, and may have a larger area than the upper surface portion 112a. In other words, the lower surface portion 112b may have a geometric shape surrounded by two curved lines and two straight lines, wherein the curved lines and the straight lines of the lower surface portion 112b may each be larger than the curved lines and the straight lines of the upper surface portion 112a.

The side portion 112c may connect the upper surface portion 112a and the lower surface portion 112b, and may have two rectangular surfaces and two curved surfaces, as shown in FIG. 7. The two curved surfaces forming the side portion 112c may be disposed at an inclined angle, as shown in FIG. 7.

Accordingly, the column body 112 may have a shape in which the curved surface of the side portion 112c is inclined as it moves from the upper surface portion 112a to the lower surface portion 112b. As a result, the shape of the hollow portion 114 formed by the four column bodies 112 may have the shape of a truncated cone, i.e., the hollow portion 114 may have a different cross-sectional area depending on the height from the top to the bottom.

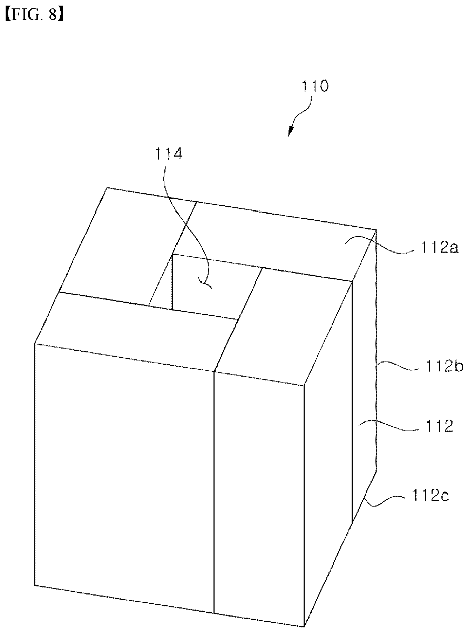

With reference to FIG. 8, the column 110 of the wind power generation apparatus 10 according to a sixth embodiment of the present disclosure will be described. In describing the wind power generation apparatus 10 according to the sixth embodiment of the present disclosure, the same description as in the first embodiment may be omitted.

The column 110 according to the sixth embodiment of the present disclosure may include the column body 112 and the hollow portion 114. The plurality of column bodies 112 may be provided, and may be arranged adjacent to each other, each including the upper surface portion 112a, the lower surface portion 112b, and the side portion 112c.

The upper surface portion 112a may have a rectangular shape and may have a predetermined area. The lower surface portion 112b may have the same shape and the same area as the upper surface portion 112a. The side portion 112c may connect the upper surface portion 112a and the lower surface portion 112b, and may include four rectangular shapes, as shown in FIG. 8. Here, two of the four rectangular shapes forming the side portion 112c may be relatively large and the other two may be relatively small.

When the plurality of column bodies 112 are arranged adjacent to each other, the side portion 112c of one column body 112 having a smaller area may be arranged in contact with the side portion 112c of the other column body 112 having a larger area. In such a way, the hollow portion 114 may be formed at the center when the plurality of column bodies 112 having a rectangular shape at the upper surface portion 112a and the lower surface portion 112b are arranged such that the side portions 112c having different sizes contact each other.

As described above, the hollow portion 114 formed by the plurality of column bodies 112 may have a square cross-sectional shape.

## Claims

1. A floating structure, comprising:
a plurality of columns providing buoyancy; and
a connecting body connecting the plurality of columns;
wherein at least one of the plurality of columns comprises:
a plurality of column bodies connected to each other, and
a hollow portion formed surrounded by the plurality of column bodies.

2. The floating structure of claim 1, wherein each of the plurality of column bodies includes:
an upper surface portion having a polygonal shape,
a lower surface portion having the same shape as the upper surface portion, and
a side portion connecting the upper surface portion and the lower surface portion,
wherein the plurality of column bodies are connected to each other by contacting adjacent side portions of the plurality of column bodies.

3. The floating structure of claim 1, wherein
each of the plurality of column bodies is formed extending in a first direction,
the plurality of column bodies are arranged in a second direction perpendicular to the first direction, and
a portion of the hollow portion is filled with seawater.

4. The floating structure of claim 1, wherein the connecting body includes:
an equipment support portion supporting equipment;
a plurality of column support portion disposed at positions spaced apart by a predetermined distance from the equipment support portion, each supporting the plurality of columns; and
a support connection portion connecting the equipment support portion and the plurality of column support portions.

5. The floating structure of claim 4, wherein each of the plurality of column support portions is provided with a connecting hole penetrating in a vertical direction.

6. The floating structure of claim 5, wherein the connecting hole is connected to the hollow portion.

7. The floating structure of claim 4, wherein the connecting body further includes a plurality of support beams each connecting the equipment support portion and the plurality of columns.

8. The floating structure of claim 1, wherein the hollow portion has a circular shape in horizontal cross-section.

9. The floating structure of claim 1, wherein the hollow portion has a polygonal shape in the horizontal cross-section.

10. The floating structure of claim 1, wherein each of the plurality of column bodies has a circular shape in the horizontal cross-section.

11. The floating structure of claim 1, wherein each of the plurality of column bodies has a polygonal shape in the horizontal cross-section.

12. The floating structure of claim 1, wherein the hollow portion has different cross-sectional areas depending on the height.

13. The floating structure of claim 2, wherein the lower surface portion has a different area from the upper surface portion.

14. A wind power generation apparatus, comprising:
a wind power generation equipment generating electricity by wind power, and
a floating structure supporting the wind power generation equipment and providing buoyancy, and
wherein the floating structure comprises:
a plurality of columns providing buoyancy, and
a connecting body connecting the plurality of columns,
wherein at least one of the plurality of columns includes a plurality of column bodies connected to each other, and a hollow portion formed surrounded by the plurality of column bodies.

15. The wind power generation apparatus of claim 14, wherein each of the plurality of column bodies includes:
an upper surface portion having a polygonal shape,
a lower surface portion having the same shape as the upper surface portion, and
a side portion connecting the upper surface portion and the lower surface portion,
wherein the plurality of column bodies are connected to each other by contacting adjacent side portions of the plurality of column bodies.

16. The wind power generation apparatus of claim 14, wherein the connecting body includes:
an equipment support portion supporting the wind power generation equipment;
a plurality of column support portion disposed at positions spaced apart by a predetermined distance from the equipment support portion, each supporting the plurality of columns; and
a support connection portion connecting the equipment support portion and the plurality of column support portions.

17. The wind power generation apparatus of claim 16, wherein each of the plurality of column support portions is provided with a connecting hole penetrating in a vertical direction.

18. The wind power generation apparatus of claim 16, wherein the connecting body further includes a plurality of support beams connecting the equipment support portion and the plurality of columns, respectively.
